Europäisches Patentamt

European Patent Office

Office européen des brevets

(19)

(11) **EP 1 128 995 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(21) Anmeldenummer: **99960886.2**

(22) Anmeldetag: **10.11.1999**

(51) Int Cl.$^7$: **B60R 21/32**, G01P 15/00

(86) Internationale Anmeldenummer:
**PCT/DE99/03583**

(87) Internationale Veröffentlichungsnummer:
**WO 00/029263 (25.05.2000 Gazette 2000/21)**

(54) **STEUERANORDNUNG FÜR EIN INSASSENSCHUTZMITTEL EINES FAHRZEUGS MITTELS DREIER BESCHLEUNIGUNGSSENSOREN**

CONTROL SYSTEM FOR AN OCCUPANT PROTECTION MEANS OF A VEHICLE, COMPRISING THREE ACCELERATION SENSORS

SYSTEME DE COMMANDE COMPORTANT TROIS CAPTEURS D'ACCELERATION POUR UN DISPOSITIF DE PROTECTION D'UN OCCUPANT DE VEHICULE AUTOMOBILE

(84) Benannte Vertragsstaaten:
**DE FR GB IT**

(30) Priorität: **13.11.1998 DE 19852468**

(43) Veröffentlichungstag der Anmeldung:
**05.09.2001 Patentblatt 2001/36**

(73) Patentinhaber: **SIEMENS AKTIENGESELLSCHAFT**
**80333 München (DE)**

(72) Erfinder: **HERRMANN, Stefan**
**D-93096 Köfering (DE)**

(56) Entgegenhaltungen:
**WO-A-98/19171          DE-A- 19 645 952**

**Beschreibung**

Die Erfindung betrifft eine Steueranordnung für ein Insassenschutzmittel eines Fahrzeugs nach dem Oberbegriff des Patentanspruchs 1. Eine derartige Steueranordnung ist aus der WO-A-98/19171 bekannt.

Eine bekannte Steueranordnung (DE 196 45 952 A1) enthält drei Beschleunigungssensoren, die unterschiedlich gerichtete Empfindlichkeitsachsen in einer in etwa durch die Fahrzeuglängsachse (A-A') und die Fahrzeugquerachse (B-B') festgelegten Ebene aufweisen. In einem Mikroprozessor werden aus zwei der drei von den Sensoren gelieferten Beschleunigungssignale die Richtung und die Stärke einer auf das Fahrzeug einwirkenden Beschleunigung ermittelt. Zumindest eine dieser ermittelten Größen wird unter Verwendung des dritten Beschleunigungssignals überprüft. Wird eine Unstimmigkeit festgestellt, wird ein Auslösen des Insassenschutzmittels, das als Airbag, Gurtstraffer, Überrollbügel, etc. ausgebildet sein kann, verhindert.

Die angestellten Berechnungen sind aufwendig und nur unter Verwendung eines Mikroprozessors zu bewältigen.

Aufgabe der Erfindung ist es, eine Steueranordnung für den Insassenschutz zu schaffen, die auf einfache Art und Weise den Defekt eines Beschleunigungssensors feststellen kann.

Die Aufgabe wird gelöst durch die Merkmale des Patentanpruchs 1.

Dabei wird durch bloße Summation von Beschleunigungssignalen der Beschleunigungssensoren ein Ausfall eines Sensors festgestellt. Weicht die Summe der Beschleunigungssignale erheblich von einem Wert ab, so liegt zumindest ein defekter Sensor vor. Als Folge wird ein Auslösen des Insassenschutzmittels gesperrt. Das Abweichen des Summensignals von dem vorgegebenen Wert wird vorzugsweise dadurch ermittelt, daß der Betrag eines Summensignals aus der Summe aller drei Beschleunigungssignale mit einem Grenzwert verglichen wird. Der Grenzwert kennzeichnet einen Toleranzbereich und ist demgemäß wenig größer als der vorgegebene Wert, vorzugsweise 5% größer. Wird der Grenzwert überschritten, so liegt ein Defekt an zumindest einem der Sensoren oder der Zuleitungen vor, so daß eine Auslöseentscheidung des Insassenschutzmittels möglicherweise aufgrund des Signals eines defekten Sensors getroffen wurde. Ein Auslösen des Insassenschutzmittels wird dann regelmäßig verhindert. Bei funktionstüchtigen Beschleunigungssensoren liefert die obengenannte Summe aufgrund der geometrischen Anordnung und Ausrichtung der Beschleunigungssensoren immer den Nullwert, so daß ein Defekt auf einfache Art und Weise erkannt werden kann. Dabei ist es je nach Anordnung der Beschleunigungssensoren zueinander erforderlich, ein oder mehrere Beschleunigungssignale vor der Summation mit einem konstanten Wert zu multiplizieren, der von den Winkeln zwischen den Beschleunigungssensoren abhängt.

Für die Summenbildung und die Vergleichsoperation ist kein Mikroprozessor erforderlich: Vielmehr können diese Operationen mit einer einfachen Hardware-Schaltung ohne Verwendung eines aufwendigen Rechenmittels durchgeführt werden. Dabei ist insbesondere vorteilhaft, daß der Mikroprozessor, der gewöhnlich zur algorithmischen Auswertung der Beschleunigungssignale und damit zum Generieren eines Zündsignals verwendet wird, nicht weiter durch Berechnungen für die oben genannte Schutzfunktion belastet wird. Weiterhin wird die Schutzfunktion nun von einer von dem Mikroprozessor unabhängigen Hardware durchgeführt. Damit wird die Wahrscheinlichkeit einer Fehlauslösung aufgrund eines defekten Bauteils der Steueranordnung, z.B. eines defekten Mikroprozessors, weiter verringert.

Vorteilhafte Weiterbildungen der Erfindung sind durch die Unteransprüche gekennzeichnet.

Die Erfindung und ihre Weiterbildungen werden anhand von Ausführungsbeispielen in der Zeichnung näher erläutert. Es zeigen:

| | |
|---|---|
| Figur 1 | ein Fahrzeug mit einer Steueranordnung, |
| Figur 2 | ein Blockschaltbild der Steueranordnung, |
| Figuren 3 und 5 | ein Vektorabbild der Beschleunigungssensoren, und |
| Figur 4 | eine in der Steueranordnung enthaltene Schaltungsanordnung. |

Gleiche Elemente und Signale erhalten figurenübergreifend die gleichen Bezugszeichen.

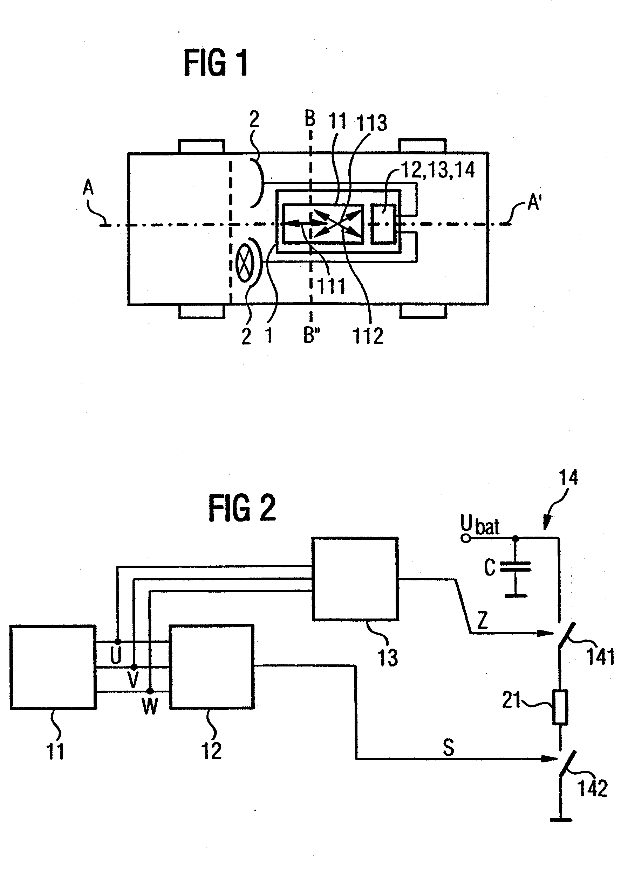

Figur 1 zeigt die erfindungsgemäße Steueranordnung in einem Fahrzeug. In etwa zentraler Position im Fahrzeug, insbesondere im Schwerpunkt des Fahrzeugs, ist ein Steuergerät 1 mit einer Sensoreinrichtung 11, einer Schaltungsanordnung 12, einem Mikroprozessor 13 und einem Zündkreis 14 angeordnet. Insassenschutzmittel 2 wie Fahrer- und Beifahrerairbag sind mit dem Steuergerät 1 verbunden.

Die Sensoreinrichtung 11 enthält drei Beschleunigungssensoren 111, 112 und 113, deren Empfindlichkeitsachsen durch Doppelpfeile in Figur 1 eingezeichnet sind. Die Empfindlichkeitsachsen liegen in etwa in einer Ebene, die durch die Fahrzeuglängsachse A-A' und die Fahrzeugquerachse B-B' bestimmt ist. Jeder Beschleunigungssensor ist bidirektional oder zweipolig ausgebildet und nimmt Beschleunigungen entlang seiner Empfindlichkeitsachse in Hin- und Rückrichtung auf. Die Sensoreinrichtung 11 ist damit ausgebildet zum Aufnehmen von Beschleunigungen, die von einem Aufprall von vorne, von der Seite, von hinten oder unter einem anderen Winkel in der zuvor beschriebenen Ebene ausgebildet. Damit ist es insbesondere vorteilhaft, über die in Figur 1 eingezeichneten Insassenschutzmittel auch Seitenairbags, Kopfairbags, Kopfstützenstellmittel etc. einzusetzen und in Abhängigkeit der Beschleunigungssignale zu aktivieren.

Figur 2 enthält ein Blockschaltbild einer erfindungsgemäßen Steueranordnung. Die Beschleunigungssignale u, v und w - die z.B. den Beschleunigungssensoren 111, 113 und 112 zuordenbar sind - werden im Mikroprozessor 13 algorithmisch verarbeitet und dabei insbesondere Intergrationsvorgängen, Vergleichsvorgängen etc. unterzogen. Wird dabei ein Aufprall als ausreichend schwer erkannt, liefert der Mikroprozessor 13 ein Zündsignal z an einen steuerbaren Schalter 141 des Zündkreises 14.

Bekannte Sensoreinrichtungen waren überwiegend durch die Anordnung zweier zueinander orthogonal angeordneter Beschleunigungssensoren gekennzeichnet. Ein Beschleunigungssensor ist dabei parallel, der andere Beschleunigungssensor quer zur Fahrzeuglängsachse A-A' ausgerichtet. Es existieren eine Vielzahl von Algorithmen, die Sensorsignale derart ausgerichteter Sensoren auswerten, so z.B. ein Algorithmus zur Steuerung der Frontairbags durch Auswertung der Beschleunigung in Richtung der Fahrzeuglängsachse (x-Signal) und ein weiterer Algorithmus zur Steuerung eines Seitenairbags durch Auswertung der Beschleunigung quer zur Fahrzeuglängsachse (y-Signal). Zur weiteren Verwendung dieser Algorithmen in der erfindungsgemäßen Steueranordnung kann der Mikroprozessor oder eine vorgelagerte Hardware-Schaltung Rechenoperationen bereitstellen, mit deren Hilfe die drei Beschleunigungssignale u, v und w in x- und y-Signale umgerechnet werden. Zur Umwandlung werden zunächst die u, v, w-Signale als Multiplikation der x- und y-Signale mit einer Matrix M dargestellt, wobei die Felder der Matrix M durch Winkelfunktionen bestimmt sind. Im folgenden wird die vorgenannte Gleichung nach dem Vektor x, y aufgelöst, so daß die Signale x und y durch die Signale u, v, w multipliziert mit einer Matrix T dargestellt werden. Die Matrix T ergibt sich durch Matrizenmultiplikation der transformierten Matrix $M^T$ mit der invertierten Matrix des Matrizenproduktes aus Matrix M und transformierter Matrix $M^T$.

Eine Auslöseentscheidung, die alleine auf der algorithmischen Auswertung der Beschleunigungssignale u, v und w beruht, beinhaltet jedoch die Gefahr von unerwünschten Auslösungen aufgrund möglicher Fehler bei Mikroprozessor 13 oder Sensoreinrichtung 11. Deshalb ist ein weiterer steuerbarer Schalter 142, vorzugsweise ein steuerbarer Leistungs-Transistorschalter, im Zündkreis 14 derart angeordnet, daß das Zündelement 21 nur mit Strom aus der Energiequelle U oder einem Zündkondensator C beaufschlagt wird, wenn beide steuerbaren Schalter 141 und 142 leitend geschaltet sind.

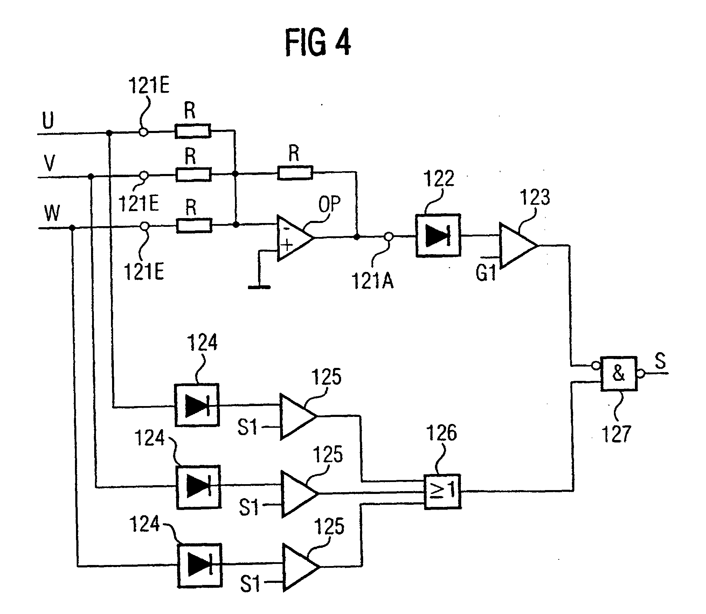

Das Sperrsignal s für den zweiten steuerbaren Schalter 142 wird von der Schaltungsanordnung 12 geliefert, die anhand Figur 4 näher erläutert wird: An den Eingängen der Schaltungsanordnung 12 liegen die Beschleunigungssignale u, v und w an. Diese Beschleunigungssignale u, v und w liegen dabei an den Eingängen 121E eines Summiergliedes 121 an. Das Summierglied ist in bekannter Weise aus Widerständen R und einem Operationsverstärker OP aufgebaut. Der Ausgang 121A des Summiergliedes 121 ist mit einem Eingang eines Gleichrichterelements 122 verbunden. Das Gleichrichterelement 122 - vorzugsweise eine Diode - ist wiederum mit einem Vergleicher 123 verbunden, bevor der Ausgang des Vergleichers 123 mit dem Eingang eines Verknüpfungselements 127 verbunden ist.

Andererseits liegt jedes Beschleunigungssignal u, v, w an einem Gleichrichterelement 124 - vorzugsweise einer Diode - zur Gleichrichtung an. Die Ausgänge der Gleichrichterelemente 124 sind mit Eingängen von Komparatoren 125 verbunden. Die Ausgänge der Komparatoren 125 sind mit Eingängen eines ODER-Gatters 126 verbunden, dessen Ausgang wiederum mit einem Eingang des Verknüpfungselements 127 verbunden ist.

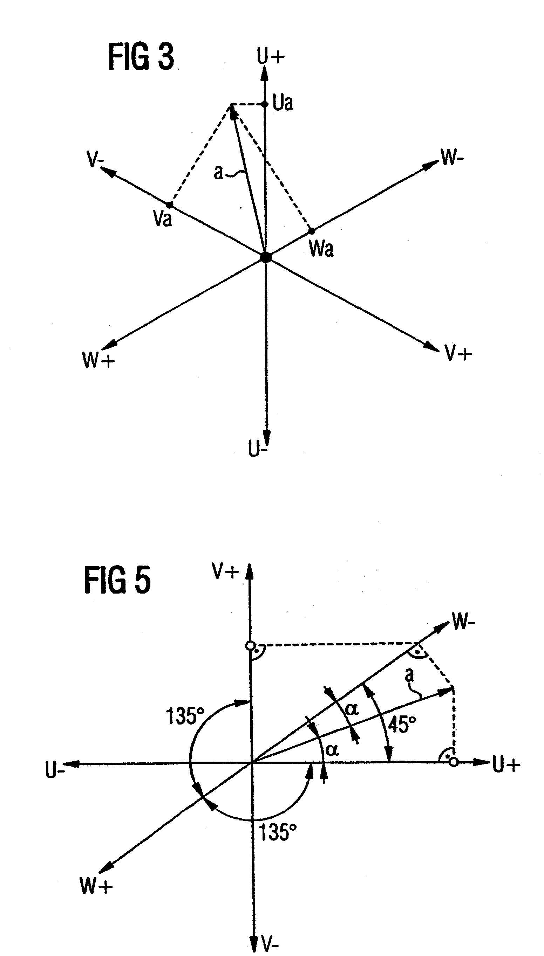

Im folgenden wird die Funktionsweise der Schaltungsanordnung nach Figur 4 unter Zuhilfenahme von Figur 3 erläutert: Das Summierglied 121 summiert die Sensorsignale u, v, w zum Summensignal u+v+w auf. Mit Hilfe des Gleichrichterelements 122 wird der Betrag |u+v+w| des Summensignals u+v+w gebildet. Im Vergleicher 123 wird der Summenbetrag |u+v+w| mit einem Grenzwert G1 verglichen. Wird dieser Grenzwert G1 überschritten, liefert der Vergleicher 123 ein HIGH-Signal an das Verknüpfungselement 127, wird dieser Grenzwert G1 unterschritten, liefert der Vergleicher 123 ein LOW-Signal an das Verknüpfungselement 127.

In Figur 3 sind die Ausrichtungen der in Winkeln von 120 Grad zueinander angeordneten Beschleunigungssensoren als Koordinaten für die von den Sensoren gelieferten Beschleunigungssignale u, v, w eingezeichnet. Die Plus-Indizes kennzeichnen dabei den positiven Wertebereich eines Signals, die Minus-Indizes den negativen Wertebereich. Ferner ist als Vektor eine auf das Fahrzeug einwirkende, beispielhafte Beschleunigung a eingezeichnet. Die senkrechten Projektionen dieses Vektors a auf die einzelnen Beschleunigungskoordinaten u, v und w liefern die von den Beschleunigungssensoren 111, 112 und 113 gelieferten Signale $u_a$, $v_a$ und $w_a$. Es ist ersichtlich, daß eine Summation dieser Signalgrößen - unter Berücksichtigung ihrer Vorzeichen - Null ergibt. Eine Summation mit diesem Ergebnis ist wiederum Zeichen dafür, daß alle drei Beschleunigungssensoren funktionstüchtig arbeiten. Würde ein Sensor einen Defekt aufweisen und beispielsweise ein Nullsignal liefern, würde die Summe der anderen beiden Signale nicht zu einer Null als Ergebnis führen und somit ein Fehler erkannt werden. Eine Abweichung der Summe - mit positivem wie mit negativem Vorzeichen - von Null kennzeichnet damit einen Fehler. Eine gewisse Abweichung von Null - gekennzeichnet durch den Grenzwert G1 - ist aufgrund von Meßungenauigkeiten etc. erlaubt. Um das Summensignal nur mit dem positiven Grenzwert G1 vergleichen zu müssen, wird es zuvor gleichgerichtet. Als äquivalente Lösung und damit vom Schutz mitumfaßt ist ein Vergleich des nicht gleichgerichteten Summensignals mit einem positiven und einem negativen Grenzwert G1.

Wird eine erhebliche Abweichung des Summensignals von Null festgestellt, so wird der Schalter 142 nicht geschlossen und damit eine Auslösung verhindert.

Zum anderen wird mit den Gleichrichterelementen 124 jedes Beschleunigungssignal u, v, w gleichgerichtet bzw. mathematisch einer Betragsbildung unterzogen, bevor jedes gleichgerichtete Beschleunigungssignal |u|, |v|, |w| mit einem Schwellwert S1 verglichen wird. Überschreitet das gleichgerichtete Beschleunigungssignal |u|, |v|, |w| die Schwelle S1, wird von dem betreffenden Komparator 125 ein HIGH-Signal an das ODER-Gatter 126 geliefert, bei Unterschreiten der Schwelle S1 ein LOW-Signal. Mit diesen Vergleichen soll erkannt werden, ob alle Beschleunigungssignale gleich Null sind. Die Schwelle S1 kennzeichnet dabei wieder einen Toleranzbereich um Null herum.

Dieser vorgenannte Schaltungsbestandteil hat zur Folge, daß mit einem LOW-Signal am Ausgang des ODER-Gatters 126 ein Zustand erkannt wird, bei dem keine Beschleunigung vorliegt oder alle drei Sensoren defekt sind und ein Nullsignal liefern.

Das Verknüpfungsglied 127 ist im Ausführungsbeispiel als UND-Gatter mit einem invertierten Eingang, der mit dem Ausgang des Vergleichers 123 verbunden ist, und mit einem nicht invertierten Eingang, der mit dem Ausgang des ODER-Gatters 126 verbunden ist, ausgebildet. Der Ausgang des Verknüpfungselements 127 ist invertiert und liefert das Sperrsignal s, das als HIGH-Signal ausgebildet ist, wenn es den Schalter 142 offen hält, und das als LOW-Signal ausgebildet ist, wenn es den Schalter 142 geschlossen hält. In jedem Fall wird ein Schließen des Schalters 142 verhindert (s=HIGH), wenn der Ausgang des Vergleichers 123 HIGH liefert und damit einen Fehler anzeigt. Andererseits wird ein Schließen des Schalters 142 verhindert (s=HIGH), wenn der Ausgang des ODER-Gatters 126 LOW liefert und damit keine Beschleunigung vorliegt oder einen Dreifach-Sensorfehler anzeigt wird. Nur wenn der Vergleicher-Ausgang 123 LOW liefert, also eine Nullsumme anzeigt, und gleichzeitig mindestens eine Beschleunigungskomponente einen Wert ungleich Null anzeigt, also das ODER-Gatter 126 ein HIGH-Signal liefert, wird der Schalter 142 geschlossen und somit ein Zünden durch den Mikroprozessor 13 erlaubt.

Ein wesentlicher Vorteil der erfindungsgemäßen Steueranordnung ist damit, daß sowohl Einfach-, Zweifach- als auch Dreifachfehler der Sensoren erkannt werden können.

Figur 5 zeigt eine Sensoreinrichtung mit drei Beschleunigungssensoren, die nun in anderen Winkeln zueinander ausgerichtet sind. Auch mit einer solchen Sensoreinrichtung läßt sich durch eine einfache Summation bzw. eine Differenzbildung als Summation mit negativem Vorzeichen und einem anschließenden Vergleich der Summe mit einem Wert der Ausfall eines Sensors auf äußerst einfache Art und Weise ermitteln. Die Sensoren, die die Signale u und v liefern sind nun in einem 90°-Winkel zueinander angeordnet. Der dritte das Signal w liefernde Sensor ist um jeweils 135° zu den beiden anderen Sensoren versetzt angeordnet. Beispielhaft sei wiederum eine auf die Sensoreinrichtung einwirkende Beschleunigung a als Vektor eingezeichnet, der einen Winkel $\alpha$ zum das Signal x liefernden Sensor aufweist. Die Beschleunigungssensoren liefern nun die Signale:

$$1) \qquad u = a * \cos \alpha$$

$$2) \qquad v = a * \sin \alpha$$

$$3) \qquad w = -a * \cos(\gamma) = -a * \cos(45°-\alpha)$$

$$= -a * (\cos 45° * \cos \alpha + \sin 45° * \sin \alpha)$$

$$= -a * \cos 45° * (\cos \alpha + \sin \alpha)$$

Nach Einsetzen der Gleichungen 1) und 2) in die Gleichung 3) ergibt sich:

$$4) \qquad w = - \cos 45° * u - \sin 45° * v$$

Diese Gleichung muß bei funktionstüchtiger Sensoranordnung erfüllt sein. Dabei können nach der Gleichung 4) die mit den Faktoren $\cos 45°$ und $\sin 45°$ multiplizierten Sensorsignale u bzw. v mit einem Wert verglichen werden, der sich aus dem Sensorsignal w ergibt. Wird dabei eine erhebliche Abweichung, z.B. von größer 10% festgestellt, so wird eine Auslösung verhindert. Dazu kann ein Grenzwert gebildet werden, der einer zehnprozentigen Abweichung vom Wert w entspricht. Der Betrag der Signalsumme aus u und v wird dann mit diesem Grenzwert verglichen.

Die Auswertung kann aber vorzugsweise auch nach der lediglich durch Umstellung aus Gleichung 4) hervorgehenden Gleichung 5) durchgeführt werden:

$$5) \qquad \cos 45° * u + \sin 45° * v + w = 0$$

Dabei wird die Gesamtsumme aus den drei ggf. mit Faktoren $\cos 45°$ bzw. $\sin 45°$ versehenen Beschleunigungssignalen gebildet und deren Betrag mit einem Grenzwert verglichen, der etwas größer ist als der Nullwert.

**Patentansprüche**

1. Steueranordnung für ein Insassenschutzmittel eines Fahrzeugs, mit einer Sensoreinrichtung (11) mit drei Beschleunigungssensoren (111,112,113), die unterschiedlich gerichtete Empfindlichkeitsachsen in einer in etwa durch die Fahrzeuglängsachse (A-A') und die Fahrzeugquerachse (B-B') festgelegten Ebene aufweisen, wobei eine Schaltungsanordnung (12) vorgesehen ist zum Summieren von Beschleunigungssignalen (u,v,w) der Beschleunigungssensoren (111,112,113) und zum Sperren einer Auslösung des Insassenschutzmittels (2), wenn die ermittelte Summe erheblich von einem Wert abweicht, **dadurch gekennzeichnet, daß** die Schaltungsanordnung (12) ausgebildet ist zum Sperren einer Auslösung des Insassenschutzmittels (2), wenn alle Beschleunigungssignale (u,v,w) gleichzeitig etwa einen Nullwert aufweisen.

2. Steueranordnung nach Anspruch 1, **dadurch gekennzeichnet, daß** die Schaltungsanordnung (12) zum Summieren aller drei Beschleunigungssignale (u,v,w) ausgebildet ist und zum Vergleichen des Betrags der Summe mit einem Grenzwert (G1).

3. Steueranordnung nach Anspruch 1 oder Anspruch 2, **dadurch gekennzeichnet, daß** die Punktion der Schaltungsanordnung (12) durch elektrische Bauelemente erreicht wird.

4. Steueranordnung nach Anspruch 2 und Anspruch 3, **dadurch gekennzeichnet, daß** die Schaltungsanordnung (12) ein Summierglied (121) mit drei Eingängen (121E) für die Beschleunigungssignale (u,v,w) und mit einem Ausgang (121A) für das Summensignal enthält.

5. Steueranordnung nach Anspruch 4, **dadurch gekennzeichnet, daß** die Schaltungsanordnung (21) ein Gleichrichterelement (122) enthält, dessen Eingang mit dem Ausgang des Summiergliedes (121) verbunden ist.

6. Steueranordnung nach Anspruch 5, **dadurch gekennzeichnet, daß** die Schaltungsanordnung (12) einen Vergleicher (123) enthält, dessen Eingang mit dem Ausgäng des Gleichrichterelements (122) verbunden ist, und der zum Vergleichen des gleichgerichteten Summensignals mit dem Grenzwert (G1) ausgebildet ist.

7. Steueranordnung nach Anspruch 1, **dadurch gekennzeichnet, daß** die Schaltungsanordnung (21) je Beschleunigungssignal (u,v,w) einen Komparator (125) aufweist zum Vergleichen des zugeführten Beschleunigungssignals (u,v,w) mit einem Schwellwert (S1).

8. Steueranordnung nach Anspruch 7, **dadurch gekennzeichnet, daß** die Schaltungsanordnung (21) ein ODER-Gatter (126) aufweist, dessen Eingänge mit den Ausgängen der Komparatoren (125) verbunden sind.

9. Steueranordnung nach Anspruch 8, **dadurch gekennzeichnet, daß** die Schaltungsanordnung (12) ein Verknüpfungsglied (127) enthält, dessen Eingänge mit dem Ausgang des Vergleichers (123) und dem Ausgang des ODER-Gatters (126) verbunden sind, und das an seinem Ausgang ein Sperrsignal (s) liefert.

10. Steueranordnung nach einem der vorhergehenden Ansprüche, **dadurch gekennzeichnet, daß** das Auslösen des Insassenschutzmittels (2) gesperrt wird, indem ein elektrisch steuerbarer Schalter (142), der zwischen einem dem Insassenschutzmittel (2) zugeordneten Zündelement (21) und einer Energiequelle (U) angeordnet ist und zum Auslösen des Insassenschutzmittels (2) leitend geschaltet werden muß, nicht leitend geschaltet wird.

**Claims**

1. Control arrangement for a vehicle safety restraint system, having a sensor system (11) comprising three acceleration sensors (111, 112, 113) with differently oriented sensing axes in a plane roughly determined by the longitudinal axis (A-A') and lateral axis (B-B') of the vehicle, a circuit arrangement (12) being provided for summing acceleration signals (u, v, w) from the acceleration sensors (111, 112, 113) and inhibiting deployment of the safety restraint system (2) if the sum determined deviates significantly from a given value, **characterised in that** the circuit arrangement (12) is designed to inhibit deployment of the safety restraint system (2) if all the acceleration signals (u, v, w) simultaneously exhibit approximately a zero value.

2. Control arrangement according to Claim 1, **characterised in that** the circuit arrangement (12) is designed to summate all the three acceleration signals (u, v, w) and compare the absolute value of the sum with a limit value (G1).

3. Control arrangement according to Claim 1 or Claim 2, **characterised in that** operation of the circuit arrangement (12) is achieved by electrical components.

4. Control arrangement according to Claim 2 and Claim 3, **characterised in that** the circuit arrangement (12) has an adder circuit (121) with three inputs (121E) for the acceleration signals (u, v, w) and one output (121A) for the summation signal.

5. Control arrangement according to Claim 4, **characterised in that** the circuit arrangement (12) contains a rectifier element (122) whose input is connected to the output of the adder circuit (121).

6. Control arrangement according to Claim 5, **characterised in that** the circuit arrangement (12) contains a comparator (123) whose input is connected to the output of the rectifier element (122) and which is designed to compare the rectified summation signal with the limit value (G1).

7. Control arrangement according to Claim 1, **characterised in that** the circuit arrangement (12) has a comparator (125) for each acceleration signal (u, v, w) for comparing the supplied acceleration signals (u, v, w) with a threshold value (S1).

8. Control arrangement according to Claim 7, **characterised in that** the circuit arrangement (12) has an OR gate (126) whose inputs are connected to the outputs of the comparators (125).

9. Control arrangement according to Claim 8, **characterised in that** the circuit arrangement (12) has a logic element (127) whose inputs are connected to the output of the comparator (123) and the output of the OR gate (126), and which delivers an inhibit signal (s) at its output.

10. Control arrangement according to one of the preceding claims, **characterised in that** deployment of the safety restraint system (2) is inhibited by the non-activation of an electrically controlled switch (142) which is disposed between a firing element (21) assigned to the safety restraint system (2) and an energy source (U) and which must be activated to deploy said safety restraint system (2).

**Revendications**

1. Dispositif de commande pour un moyen de protection des occupants d'un véhicule, avec un dispositif de détection (11) avec trois capteurs d'accélération (111, 112, 113) qui possèdent des axes de sensibilité orientés différemment dans un plan défini approximativement par l'axe longitudinal du véhicule (A-A') et l'axe transversal du véhicule (B-B'), dans lequel un dispositif de commutation (12) est prévu pour l'addition des signaux d'accélération (u, v, w) des capteurs d'accélération (111, 112, 113) et pour le blocage du déclenchement du moyen de protection des occupants (2) lorsque la somme établie s'écarte considérablement d'une valeur, **caractérisé en ce que** le dispositif de commutation (12) est conçu pour le blocage du déclenchement du moyen de protection des occupants (2) lorsque tous les signaux d'accélération (u, v, w) possèdent en même temps une valeur approximativement nulle.

2. Dispositif de commande selon la revendication 1, **caractérisé en ce que** le dispositif de commutation (12) est conçu pour effectuer la somme des trois signaux d'accélération (u, v, w) et la comparaison de la valeur absolue de la somme avec une valeur limite (G1).

3. Dispositif de commande selon la revendication 1 ou la revendication 2, **caractérisé en ce que** la fonction du dispositif de commutation (12) est obtenue par des composants électriques.

4. Dispositif de commande selon la revendication 2 ou la revendication 3, **caractérisé en ce que** le dispositif de commutation (12) comporte un élément additionneur (121) avec trois entrées (121E) pour les signaux d'accélération (u, v, w) et avec une sortie (121A) pour le signal somme.

5. Dispositif de commande selon la revendication 4, **caractérisé en ce que** le dispositif de commutation (12) contient un élément redresseur (122) dont l'entrée est reliée à la sortie de l'élément additionneur (121).

6. Dispositif de commande selon la revendication 5, **caractérisé en ce que** le dispositif de commutation (12) contient un comparateur (123) dont l'entrée est reliée à la sortie de l'élément redresseur (122), et qui est conçu pour la comparaison du signal somme redressé avec la valeur limite (G1).

7. Dispositif de commande selon la revendication 1, **caractérisé en ce que** le dispositif de commutation (12) possède pour chaque signal d'accélération (u, v, w) un comparateur (125) pour comparer le signal d'accélération (u, v, w) entrant avec une valeur seuil (S1).

8. Dispositif de commande selon la revendication 7, **caractérisé en ce que** le dispositif de commutation (12) possède une porte OU (126) dont les entrées sont reliées aux sorties du comparateur (125).

9. Dispositif de commande selon la revendication 8, **caractérisé en ce que** le dispositif de commutation (12) contient un élément logique (127) dont les entrées sont reliées à la sortie du comparateur (123) et à la sortie de la porte OU (126), et qui émet sur sa sortie un signal de blocage (s).

10. Dispositif de commande selon l'une des revendications précédentes, **caractérisé en ce que** le déclenchement du moyen de protection des occupants (2) est bloqué du fait qu'un commutateur commandable électriquement (142), qui est monté entre un élément d'allumage (21) associé au moyen de protection des occupants (2) et une source d'énergie (U) et devant être mis en position passante pour obtenir le déclenchement du moyen de protection des occupants (2), n'est pas mis en position passante.

## FIG 1

## FIG 2

FIG 3

FIG 5

# FIG 4